# EUROPEAN PATENT SPECIFICATION

(11) **EP 1 200 371 B1**
(45) Date of publication and mention of the grant of the patent: **04.01.2006**
(21) Application number: 00952248.3
(22) Date of filing: 28.07.2000
(51) Int. Cl.: C04B 37/00, C04B 37/02, H01M 2/08

(54) **GLASS-CERAMIC JOINING MATERIAL AND METHOD OF JOINING**
GLASKERAMISCHES VERBINDUNGSMATERIAL UND VERBINDUNGSVERFAHREN
COMPOSITE A MATRICE VITROCERAMIQUE DE JONCTION ET PROCEDE DE JONCTION

(30) Priority: 30.07.1999 US 365343; 01.05.2000 US 562583
(43) Date of publication of application: 02.05.2002
(73) Proprietor: BATTELLE MEMORIAL INSTITUTE, Richland, WA 99352 (US)
(72) Inventor: Meinhardt, Kerry D., Apartment R, Richland, WA 99352 (US); Vienna, John D., West Richland, WA 99353 (US); Armstrong, Timothy R., Clinton, TN 37716 (US); Pederson, Larry R., Kennewick, WA 99338 (US)
(74) Representative: Brown, Fraser Gregory James
(86) International application number: PCT/US2000/020534
(87) International publication number: WO 2001/009059

(56) References cited:
- EP-A- 0 055 049
- EP-A- 0 220 813
- EP-A- 0 351 097
- DE-A- 3 134 739
- GB-A- 1 019 821
- PATENT ABSTRACTS OF JAPAN vol. 9, no. 89 (E-309), 18 April 1985 (1985-04-18) -& JP 59 219850 A (MITSUBISHI DENKI KK), 11 December 1984 (1984-12-11)
- K.L. LEY ET AL.: J. MATER. RES., vol. 11, no. 6, June 1996 (1996-06), pages 1489-1493, XP000951437 cited in the application
- C. GÜNTHER ET AL.: ELECTROCHEMICAL PROCEEDINGS, vol. 97-18, 1997, pages 746-756, XP000951506 cited in the application

## Description

### FIELD OF THE INVENTION

The present invention s a glass ceramic material and method of making, specifically for use in electrochemical devices such as fuel cells, gas sensors, oxygen or hydrogen pumps/separators, or for sealing any material with a thermal expansion coefficient similar to the seal material.

As used herein, the terms "solid electrolyte" or "solid oxide ion conducting electrolyte" are interchangable.

As used herein, the term "joint" includes the term "seal" because, in this glass-ceramic field, the "seal" joins at least two parts. However, the "joint" may be intermittent thereby not serving as a "seal".

### BACKGROUND OF THE INVENTION

Ceramic materials are being used more often from automobile turbochargers to experimental fuel cells. However, there remains the problem of joining and/or sealing ceramic components to other ceramic components, to metal components, or to combinations thereof (e.g., cermet components) such that the joint maintains integrity during operation. For example, solid oxide ion conducting electrolytes are useful for oxygen separation and high temperature fuel cells. Although many technical challenges of their development have been overcome, there remains the problem of sealing. In a planar design, a gas-tight seal must bond the components together and prevent the mixing of the gas species on both sides of the solid oxide ion conducting electrolyte.

A limited number of materials are suitable as a solid oxide ion conducting electrolyte. The most commonly used materials are yttria stabilized zirconia (YSZ), doped ceria, doped bismuth oxide and doped lanthanum gallate. The thermal expansion coefficient of these materials can range from 10.1 x 10⁻⁶ to 14.3 x 10⁻⁶ °C⁻¹ depending on the type of dopant and concentration. The operating temperature can also range from 700°C to 1000°C depending upon which material is chosen as the electrolyte. Therefore, the seal material must be tailored to match the electrolyte thermal expansion, maintain a gas tight seal at temperatures ranging from 200 °C to 1200 °C, and not have detrimental chemical interactions with the fuel cell components. In addition, the seal material must also be stable at the operating temperature (800-1000°C) for extended periods of time (>9,000 hr) and be electrically insulating. For a solid oxide fuel cell, the seal must be able to survive extremely reducing environments.

Various efforts to seal solid oxide ion conducting devices have been made with varying degrees of success. Silica, boron, and phosphate-based glasses and glass-ceramics have been evaluated as a sealing material¹⁻⁴ for solid oxide fuel cells. Experiments conducted by P.H. Larsen et al¹ have shown major problems with glasses purely based on phosphate as the glass former. At temperature, the phosphate volatilized and reacted with the anode to form nickel phosphide and zirconiumoxyphosphate. Additionally, these phosphate glasses usually crystallized to form meta- or pyrophosphates, which exhibited low stability in a humidified fuel gas at the operating temperature.

Borosilicate glasses and glass ceramics have also been considered as potential seal materials. These glasses have been investigated by C. Günther et al² and K.L. Ley et al³ for use in solid oxide fuel cells. However, boron will react with a humidified hydrogen atmosphere to form the gaseous species B₂(OH)₂ and B₂(OH)₃ at the operating temperature². Therefore, any high boron seal may corrode in a humidified hydrogen environment over time. Glasses with B₂O₃ as the only glass former have showed up to a 20% weight loss in the humidified hydrogen environment and extensive interactions with fuel cell component materials both in air and wet fuel gas.'

Silica-based glasses and glass-ceramics offer the most promise. They typically have a higher chemical resistance and show minimal interaction with the fuel cell component materials.' Unfortunately, these glasses tend to have thermal expansions below the range needed for a sealing material.

At the operating temperature, most glasses will crystallize with time. Therefore, it is critical to have a glass composition in which the thermal expansion coefficient after crystallization is compatible with the solid oxide ion conducting electrolyte. Once the glass is fully crystallized, it is typically very stable over time. In addition, crystallized glasses tend to be stronger mechanically at operating temperature, improving seal performance.

Hence, there is a need in the art for sealing material that can operate at an operating temperature up to about 900°C, has a thermal expansion coefficient between 8 x 10⁻⁶ and 15 x 10⁻⁶ °C⁻¹, and has no detrimental chemical interactions with the components.

### BACKGROUND BIBLIOGRAPHY

1. P.H. Larsen, C. Bagger, M. Mogensen and J.G. Larsen, *Proc. 4*^{*th*} *Int. Symp. Solid Oxide Fuel Cells,* Volume 95-1, 1995, pp.69-78.
2. C. Günther, G. Hofer and W. Kleinlein, *Proc. 5*^{*th*} *Int. Symp. Solid Oxide Fuel Cells,* Volume 97-18, 1997, pp.746-756.
3. K.L. Ley, M. Krumpelt, R. Kumar, J.H. Meiser, and I. Bloom, J. Mat. Res., Vol. 11, No. 6, (1996) pp. 1489-1493.
4. Yoshinori Sakaki, Masatoshi Hattori, Yoshimi Esaki, Satoshi Ohara, Takenhisa Fukui, Kaseki Kodera, Yukio Kubo, *Proc. 5*^{*th*} *Int. Symp. Solid Oxide Fuel Cells,* Volume 97-18, 1997, pp.652-660.

### SUMMARY OF THE INVENTION

The present invention provides a joint between a solid ceramic component and at least one other solid component, said joint comprising a portion of the solid ceramic material, a portion of the at least one other solid component and a joining portion comprising at least three metal oxides M1-M2-M3, wherein M1 is selected from the group consisting of BaO, SrO, CaO, MgO and combinations thereof and wherein M1 is present in an amount from 20 mol% to 55 mol%, M2 is Al₂O₃ and wherein M2 is present in an amount from 2 to 15 mol%, and M3 is SiO₂ with at least some B₂O₃ and up to 50 mol% of B₂O₃ and wherein M3 is present in an amount from 40 mol% to 70 mol%, said joint having a coefficient of thermal expansion substantially matching that of said solid ceramic component and said at least one other solid component.

The present invention also provides a method of joining a ceramic component and at least at one other solid component, comprising the steps of:
(a) providing a portion of the solid ceramic material, a portion of the at least one other solid component and a joining portion comprising a blend of M1-M2-M3 wherein M1 is selected from the group consisting of BaO, SrO, CaO, MgO and combination thereof and wherein M1 is present in an amount from 20 mol% to 55 mol%, M2 is Al₂O₃ and wherein M2 is present in an amount from 2 mol% to 15 mol%, and M3 is SiO₂ with at least some B₂O₃ and up to 50 mol% of B₂O₃ and wherein M3 is present in an amount from 40 mol% to 70 mol%, said joining portion having a coefficient of thermal expansion substantially matching that of said ceramic component and said at least one other solid component;
(b) placing said blend at an interface of said solid ceramic component and said at least one other solid component as a pre-assembly
(c) heating said pre-assembly to a temperature sufficient to cause the blend to flow into said interface as an assembly; and
(d) cooling said assembly and solidifying said blend thereby joining said solid ceramic component and said at least one other solid component.

According to the present invention, a series of glass ceramics in the M1-Al₂O₃-M3 system can be used to join or seal both tubular and planar ceramic solid oxide fuel cells, oxygen electrolyzers, and membrane reactors for the production of syngas, commodity chemicals and other products.

It is an object of the present invention to provide a compound useful for joining or sealing a solid electrolyte or a solid oxide ion conducting electrolyte.

An advantage of a joint/seal made with the compound of M1-Al₂O₃-M3 is the maintaining of a substantially constant coefficient of thermal expansion from the glass to crystalline phase.

The subject matter of the present invention is particularly pointed out and distinctly claimed in the concluding portion of this specification. However, both the organization and method of operation, together with further advantages and objects thereof, may best be understood by reference to the following description taken in connection with accompanying drawings wherein like reference characters refer to like elements.

### BRIEF DESCRIPTION OF THE DRAWINGS

FIG. 1 is a phase diagram showing the compositional range of the M1-Al₂O₃-M3 joint/seal material according to the present invention; and
FIG. 2 is a graph of coefficient of thermal expansion versus temperature for a solid electrolyte and the glass-ceramic material of the present invention.

### DESCRIPTION OF THE PREFERRED EMBODIMENT(S)

The present invention is a glass-ceramic joint and method of joining a solid ceramic component and at leastone other solid component. The present invention is useful for joining or sealing between at least two solid ceramic parts, for example a seal in an electrochemical cell having at least one solid electrolyte having a first and second side exposed to first and second gas species respectively. The present invention is also useful for joining or sealing between a solid ceramic component and a metal component or a cermet component. The seal is necessary for separating the first and second gas species during operation, usually at elevated temperatures.

The present invention includes a joint between a solid ceramic component and at least one other solid component that is preferably a solid ceramic component, a metal component, or a combination thereof such as a cermet component. The joint has at least three metal oxides of M1-M2-M3. M1 is BaO, SrO, CaO, MgO, or combinations thereof. M2 is Al₂O₃. M3 is SiO₂ with up to 50 mol% B₂O₃. The joint substantially matches a coefficient of thermal expansion of the components comprising the joint. The coefficient of thermal expansion of the joint is from about 7 x 10⁻⁶ °C⁻¹ to about 15 x 10⁻⁶ °C⁻¹ as measured from 25 °C to 1000 °C.

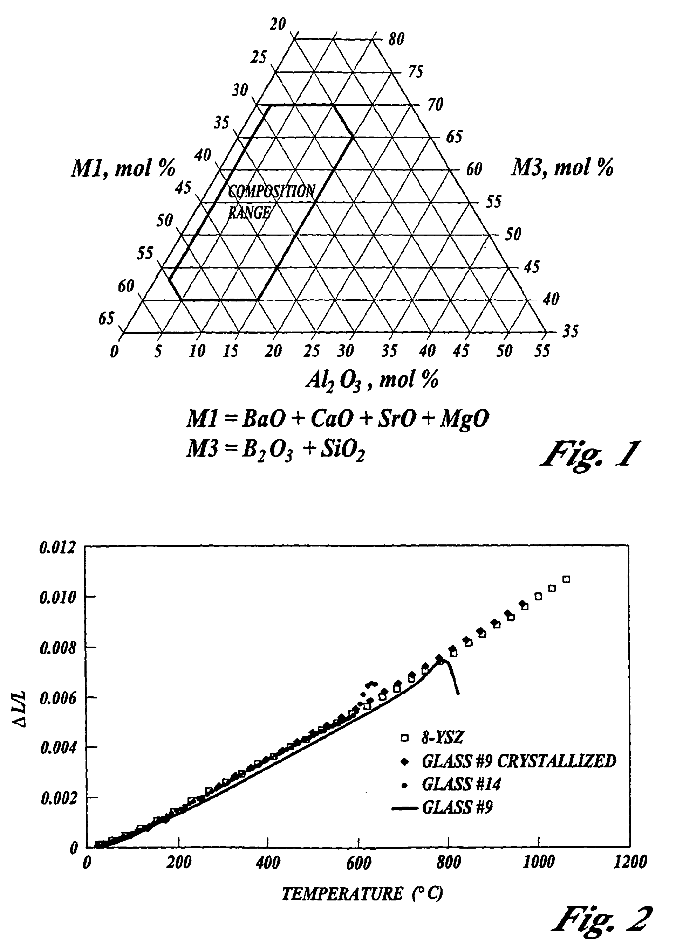

The composition of the joint/seal Is preferably in the range wherein M1 is present in an amount from about 20 mol% to about 55 mol%, Al₂O₃ is present in an amount from about 2 mol% to about 15 mol%, and M3 is present in an amount from about 40 mol% to about 70 mol%. The compositional range for the M1-Al₂O₃-M3 system is shown in FIG. 1.

The glass-ceramic compound may further contain at least one additional metal oxide including, but not limited to, ZrO₂, TiO₂, Cr₂O₃, and combinations thereof to modify the properties of the glass phase or the final crystallized seal. Properties include, but are not limited to, wetting, glass transition temperature (Tg), glass softening temperature (Ts), thermal expansion coefficient, and combinations thereof.

The range of thermal expansion coefficients for both glass-ceramic and crystallized glass-ceramic is from 7 X 10⁻⁶ to 13 X 10⁻⁶°C⁻¹. The glass transition temperatures (Tg) and softening temperature (Ts) for the glass-ceramics are in the range of 650° - 800°C. However, the crystallized glass-ceramic has a softening temperature above 1000 °C.

Substantially the same coefficient of thermal expansion is herein defined as the coefficient of thermal expansion of the seal material within about 30%, preferably within about 16%, more preferably within about 5% of the sealed material.

The joint may be used in an electrochemical test cell to join an oxygen ion pump and a test material. In addition, the joint may be used in an oxygen generator or a fuel cell to join an oxygen ion conducting electrolyte, for example a zirconia electrolyte, and an interconnect, for example manganite, chromite, metal, and combinations thereof.

According to the present invention, a method of joining a solid ceramic component with at least one other solid component has the steps of:
(a) providing a blend of M1, Al₂O₃, and M3 that substantially matches a coefficient of thermal expansion of a solid ceramic component and at least one other solid component, which is preferably another ceramic component, a metal component, or a combination thereof such as a cermet component. M1 is BaO, SrO, CaO, MgO, or combinations thereof. Al₂O₃ is present in the blend in an amount from 2 to 15 mol%. M3 is SiO₂ with up to 50 mol% B₂O₃;
(b) placing said blend at an interface of said solid ceramic component and said at least one other solid component as a pre-assembly;
(c) heating said pre-assembly to a temperature sufficient to cause the blend to flow into and wet the interface as an assembly; and
(d) cooling said assembly and solidifying said blend thereby joining said solid ceramic component and said at least one other solid component.

### EXAMPLE 1

An experiment was conducted to demonstrate the glass-ceramic materials (referred to simply as "glass" in Tables E1-1 and E1-2 and FIG. 2) of the present invention.

Table E1-1 shows several compositions. The major crystallized phases can include BaO • 2SiO₂, 2BaO • 3SiO₂, BaO • SiO₂, and BaO • Al₂O₃ • 2SiO₂.

**TABLE E1-1. Glass-Ceramic Material Compositions**

| Glass ID# | Glass Composition (mole%) | | | | | |
|---|---|---|---|---|---|---|
| | BaO | SrO | CaO | Al₂O₃ | B₂O₃ | SiO₂ |
| 1 | 34.8 | 4.8 | ---- | 10.4 | ---- | 50.0 |
| 3 | 33.0 | 5.0 | ---- | 7.7 | ---- | 54.3 |
| 7b | 33.7 | ---- | ---- | 10.5 | ---- | 55.8 |
| 9 | 36.9 | ---- | ---- | 10.5 | ---- | 52.6 |
| 10 | 42.5 | ---- | ---- | 7.5 | ---- | 50.0 |
| 11 | 45.0 | ---- | ---- | 5.0 | ---- | 50.0 |
| 12 | 41.3 | ---- | ---- | 5.0 | ---- | 53.7 |
| 13 | 37.5 | ---- | ---- | 5.0 | ---- | 57.5 |
| 1d | 34.8 | --- | 4.8 | 10.4 | ---- | 50.0 |
| 14 | 30.0 | ---- | 10.0 | 10.0 | 20.0 | 30.0 |
| 15 | 25 | | 10 | 15 | 15 | 35 |
| 17 | 20 | | 10 | 5 | 30 | 35 |
| 18 | 35 | | 15 | 5 | 10 | 35 |

FIG. 2 illustrates how well the glass-ceramic material was tailored to match a solid electrolyte. The solid electrolyte material was 8-YSZ and the glass-ceramic compositions were #9 and #14 (i.e., Glass IDs #9 and #14). The thermal expansion of the crystallized glass-ceramic materials was within 0.06% of the expansion of the solid electrolyte material.

Table E1-2 shows properties of the glass-ceramic material of the present invention.

**TABLE E1-2. Glass-Ceramic Material Properties**

| Glass ID# | Glass Transition Temperature (Tg, °C) | Softening Temperature (Ts, °C) | Thermal Expansion (Glass, 25°C to Tg) | Thermal Expansion (Crystallized Glass, 25°C to 1000°C) |
|---|---|---|---|---|
| 1 | 700 | 760 | 10.3 | 12.8 |
| 3 | 728 | 791 | 9.5 | 9.2 |
| 7b | 760 | 803 | 8.8 | 7.6 |
| 9 | 726 | 803 | 9.4 | 10.5 |
| 10 | 736 | 788 | 11.2 | 13.4 |
| 11 | 710 | 763 | 11.4 | 14.6 |
| 12 | 702 | 749 | 11.5 | 12.8 |
| 13 | 695 | 745 | 11.1 | 9.6 |
| 1d | 738 | 802 | 10.0 | 11.5 |
| 1e | 720 | 783 | 10.4 | 12.5 |
| 14 | 597 | 640 | 9.48 | ---- |
| 15 | 620 | 684 | 7.5 | ---- |
| 17 | 621 | 670 | 7.85 | ---- |
| 18 | 588 | 650 | 10.8 | ---- |

### EXAMPLE 2

Seals formed from a glass frit were used to fabricate sealed 8YSZ oxygen pumps. A zirconia pump of fully dense small closed end tube and test material of flat plate of 8 mol% stabilized zirconia were sealed together with a mixture of 70 wt% glass-ceramic composition #9 and 30 wt% glass-ceramic composition #14 to assemble an electrochemical test cell. The tube was electroded with Pt on both the inside and outside to function as an oxygen pump. Pt leads were connected to the electrodes. The pre-assembly was placed in a furnace, heated to 1150°C to seal. The temperature was reduced after sealing to the crystallization temperature and held there until the seal crystallized. After crystallization, the assembly was allowed to cool to room temperature

The assembly was tested by pumping oxygen out of the sealed assembly and found capable of reaching a partial pressure of oxygen of 1 x 10⁻¹⁸ atm at 1000 °C. An oxygen leak rate of 3.7 x 10⁻⁵ standard cubic centimeters per sec (sccs) was calculated from the pumping current. This is adequate for solid oxide fuel cells and oxygen generators.

## Claims

1. A joint between a solid ceramic component and at least one other solid component, said joint comprising a portion of the solid ceramic material, a portion of the at least one other solid component and a joining portion comprising at least three metal oxides M1-M2-M3, wherein M1 is selected from the group consisting of BaO, SrO, CaO, MgO and combinations thereof and wherein M1 is present in an amount from 20 mol% to 55 mol%, M2 is Al₂O₃ and wherein M2 is present in an amount from 2 to 15 mol%, and M3 is SiO₂ with at least some B₂O₃ and up to 50 mol% of B₂O₃ and wherein M3 is present in an amount from 40 mol% to 70 mol%, said joint having a coefficient of thermal expansion substantially matching that of said solid ceramic component and said at least one other solid component.

2. The joint as recited in claim 1, wherein said at least one other solid component is ceramic.

3. The joint as recited in claim 1, wherein said at least one other solid component is metal.

4. The joint as recited in claim 1, wherein said at least one other solid component is cermet.

5. The joint as recited in claim 1 that is a seal.

6. The joint as recited in claim 1 wherein said coefficient of thermal expansion is from about 7 x 10-6 °C⁻¹ to about 15 x 10-6 °C⁻¹ as measured from 25°C to 1000°C.

7. The joint as recited in claim 1, further comprising at least one additional metal oxide.

8. The joint as recited in claim 7, wherein said at least one additional metal oxide is selected from the group consisting of ZrO₂, TiO₂, Cr₂O₃, and combinations thereof.

9. The joint as recited in claim 1, wherein said solid ceramic component and said at least one other solid component are an oxygen ion pump and a test material in an electrochemical test cell.

10. The joint as recited, in claim 1, wherein said solid ceramic component and said at least one other solid component are an oxygen ion conductor and an interconnect in an oxygen generator.

11. The joint as recited in claim 1, wherein said solid ceramic component and said at least one other solid component are an oxygen ion conductor and an interconnect in a fuel cell.

12. A method of joining a solid ceramic component and at least one other solid component, comprising the steps of:
(a) providing a portion of the solid ceramic material, a portion of the at least one other solid component and a joining portion comprising a blend of M1-M2-M3 wherein M1 is selected from the group consisting of BaO, SrO, CaO, MgO and combinations thereof and wherein M1 is present in an amount from 20 mol% to 55 mol%, M2 is Al₂O₃ and wherein M2 is present in an amount from 2 mol% to 15 mol%, and M3 is SiO₂ with at least some B₂O₃ and up to 50 mol% of B₂O₃ and wherein M3 is present in an amount from 40 mol% to 70 mol%, said joining portion having a coefficient of thermal expansion substantially matching that of said solid ceramic component and said at least one other solid component;
(b) placing said blend at an interface of said solid ceramic component and said at least one other solid component as a pre-assembly;
(c) heating said pre-assembly to a temperature sufficient to cause the blend to flow into said interface as an assembly; and
(d) cooling said assembly and solidifying said blend thereby joining said solid ceramic component and said at least one other solid component.

13. The method as recited in claim 12 wherein said joining is sealing.

14. The method as recited in claim 12, wherein said coefficient of thermal expansion is from about 7 x 10-6 °C⁻¹ to about 16 x 10-6 °C⁻¹ as measured from 25°C to 1000°C.

15. The method as recited in claim 12, further comprising at least one additional metal oxide.

16. The method as recited in claim 15, wherein said at least one additional metal oxide is selected from the group consisting of ZrO₂, TiO₂, Cr₂O₃, and combinations thereof.

17. The method as recited in claim 12, wherein said solid ceramic component and said at least one other solid component are an oxygen ion pump and a test material in an electrochemical test cell.

18. The method as recited in claim 13, wherein said solid ceramic component and said at least one other solid component are an oxygen ion conductor and an interconnect in a fuel cell.

19. The method as recited in claim 12, wherein said solid ceramic component and said at least one other solid component are an oxygen ion conductor and an interconnect in an oxygen generator.

## Patentansprüche

1. Verbindung zwischen einer keramischen Festkörperkomponente und mindestens einer anderen Festkörperkomponente, wobei die Verbindung einen Abschnitt des keramischen Festkörpermaterials, einen Abschnitt der mindestens einen anderen Festkörperkomponente und einen verbindenden Abschnitt, umfassend mindestens drei Metalloxide M1-M2-M3, wobei M1 aus der Gruppe, bestehend aus BaO, SrO, CaO, MgO und Kombinationen davon, ausgewählt ist und wobei M1 in einer Menge von 20 Mol-% bis 55 Mol-% vorliegt, M2 Al₂O₃ ist und wobei M2 in einer Menge von 2 bis 15 Mol-% vorliegt, und M3 SiO₂ mit mindestens etwas B₂O₃ und bis zu 50 Mol-% B₂O₃ ist und wobei M3 in einer Menge von 40 Mol-% bis 70 Mol-% vorliegt, umfasst, wobei die Verbindung einen thermischen Ausdehnungskoeffizienten aufweist, der im wesentlichen zu demjenigen der keramischen Festkörperkomponente und der mindestens einen anderen Festkörperkomponente passt.

2. Verbindung gemäß Anspruch 1, wobei die mindestens eine andere Festkörperkomponente eine Keramik ist.

3. Verbindung gemäß Anspruch 1, wobei die mindestens eine andere Festkörperkomponente ein Metall ist.

4. Verbindung gemäß Anspruch 1, wobei die mindestens eine andere Festkörperkomponente ein Cermet ist.

5. Verbindung gemäß Anspruch 1, die ein Dichtungselement ist.

6. Verbindung gemäß Anspruch 1, wobei der thermische Ausdehnungskoeffizient von etwa 7 x 10-6°C⁻¹ bis etwa 15 x 10-6⁻¹, gemessen von 25°C bis 1000°C, beträgt.

7. Verbindung gemäß Anspruch 1, weiter umfassend mindestens ein zusätzliches Metalloxid.

8. Verbindung gemäß Anspruch 7, wobei das mindestens eine zusätzliche Metalloxid aus der Gruppe, bestehend aus ZrO₂, TiO₂, Cr₂O₃ und Kombinationen davon, ausgewählt ist.

9. Verbindung gemäß Anspruch 1, wobei die keramische Festkörperkomponente und die mindestens eine andere Festkörperkomponente eine Sauerstoffionenpumpe und ein Testmaterial in einer elektrochemischen Testzelle sind.

10. Verbindung gemäß Anspruch 1, wobei die keramische Festkörperkomponente und die mindestens eine andere Festkörperkomponente ein Sauerstoffionenleiter und eine Zwischenverbindung in einem Sauerstoffgenerator sind.

11. Verbindung gemäß Anspruch 1, wobei die keramische Festkörperkomponente und die mindestens eine andere Festkörperkomponente ein Sauerstoffionenleiter und eine Zwischenverbindung in einer Brennstoffzelle sind.

12. Verfahren zum Verbinden einer keramischen Festkörperkomponente und mindestens einer anderen Festkörperkomponente, umfassend die Schritte:
(a) Bereitstellen eines Abschnitts der keramischen Festkörperkomponente, eines Abschnitts der mindestens einen anderen Festkörperkomponente und eines verbindenden Abschnitts, umfassend ein Gemisch von M1-M2-M3, wobei M1 aus der Gruppe, bestehend aus BaO, SrO, CaO, MgO und Kombinationen davon, ausgewählt ist und wobei M1 in einer Menge von 20 Mol-% bis 55 Mol-% vorliegt, M2 Al₂O₃ ist und wobei M2 in einer Menge von 2 Mol-% bis 15 Mol-% vorliegt, und M3 SiO₂ mit mindestens etwas B₂O₃ und bis zu 50 Mol-% B₂O₃ ist, und wobei M3 in einer Menge von 40 Mol-% bis 70 Mol-% vorliegt, wobei der verbindende Abschnitt einen thermischen Ausdehnungskoeffizienten aufweist, der im wesentlichen zu demjenigen der keramischen Festkörperkomponente und der mindestens einen anderen Festkörperkomponente passt;
(b) Anordnen des Gemisches an einer Grenzfläche der keramischen Festkörperkomponente und der mindestens einen anderen Festkörperkomponente als eine Vor-Einheit;
(c) Erwärmen der Vor-Einheit auf eine Temperatur, die ausreichend ist zu bewirken, daß das Gemisch in die Grenzfläche als eine Einheit strömt; und
(d) Abkühlen der Einheit und Verfestigen des Gemisches, wodurch die keramische Festkörperkomponente und die mindestens eine andere Festkörperkomponente miteinander verbunden werden.

13. Verfahren gemäß Anspruch 12, wobei das Verbinden ein Abdichten ist.

14. Verfahren gemäß Anspruch 12, wobei der thermische Ausdehnungskoeffizient von etwa 7 x 10-6°C⁻¹ bis etwa 16 x 10-6°C⁻¹, gemessen von 25°C bis 1000°C, beträgt.

15. Verfahren gemäß Anspruch 12, weiter umfassend mindestens ein zusätzliches Metalloxid.

16. Verfahren gemäß Anspruch 15, wobei das mindestens eine zusätzliche Metalloxid aus der Gruppe, bestehend aus ZrO₂, TiO₂, Cr₂O₃ und Kombinationen davon, ausgewählt ist.

17. Verfahren gemäß Anspruch 12, wobei die keramische Festkörperkomponente und die mindestens eine andere Festkörperkomponente eine Sauerstoffionenpumpe und ein Testmaterial in einer elektrochemischen Testzelle sind.

18. Verfahren gemäß Anspruch 13, wobei die keramische Festkörperkomponente und die mindestens eine andere Festkörperkomponente ein Sauerstoffionenleiter und eine Zwischenverbindung in einer Brennstoffzelle sind.

19. Verfahren gemäß Anspruch 12, wobei die keramische Festkörperkomponente und die mindestens eine andere Festkörperkomponente ein Sauerstoffionenleiter und eine Zwischenverbindung in einem Sauerstoffgenerator sind.

## Revendications

1. Joint entre un composant céramique solide et au moins un autre composant solide, ledit joint comprenant une partie de la céramique solide, une partie du au moins un autre composant solide, et une partie de jonction comprenant au moins trois oxydes métalliques M1-M2-M3, où M1 est choisi dans le groupe constitué de BaO, SrO, CaO, MgO et de combinaisons de ceux-ci, et où M1 est présent en une quantité de 20 % molaire à 55 % molaire, M2 est le Al₂O₃ et où M2 est présent en une quantité de 2 à 15 % molaire, et où M3 est le SiO₂ avec au moins une certaine quantité de B₂O₃ et jusqu'à 50 % molaire de B₂O₃, et où M3 est présent en une quantité de 40 % molaire à 70 % molaire, ledit joint ayant un coefficient de dilatation thermique correspondant sensiblement à celui dudit composant céramique solide et dudit au moins un autre composant solide.

2. Joint selon la revendication 1, dans lequel ledit au moins un autre composant solide est la céramique.

3. Joint selon la revendication 1, dans lequel ledit au moins un autre composant solide est du métal.

4. Joint selon la revendication 1, dans lequel ledit au moins un autre composant solide est le cermet.

5. Joint selon la revendication 1, qui est un joint d'étanchéité.

6. Joint selon la revendication 1, dans lequel ledit coefficient de dilatation thermique est compris entre environ 7 x 10⁻⁶° C⁻¹ et environ 15 x 10⁻⁶° C⁻¹, comme mesuré entre 25° C et 1 000° C.

7. Joint selon la revendication 1, comprenant en outre au moins un oxyde métallique supplémentaire.

8. Joint selon la revendication 7, dans lequel ledit au moins un oxyde métallique supplémentaire est choisi dans le groupe constitué de ZrO₂, TiO₂, Cr₂O₃, et de combinaisons de ceux-ci.

9. Joint selon la revendication 1, dans lequel ledit composant céramique solide et ledit au moins un autre composant solide sont une pompe ionique d'oxygène et un matériau d'essai dans une cellule d'essai électrochimique.

10. Joint selon la revendication 1, dans lequel ledit composant céramique solide et ledit au moins un autre composant solide sont un conducteur ionique d'oxygène et une interconnexion dans un générateur d'oxygène.

11. Joint selon la revendication 1, dans lequel ledit composant céramique solide et ledit au moins un autre composant solide sont un conducteur ionique d'oxygène et une interconnexion dans un réservoir à combustible.

12. Procédé permettant de joindre un composant céramique solide et au moins un autre composant solide, comprenant les étapes consistant à :
(a) fournir une partie du matériau céramique solide, une partie d'au moins un autre composant solide et une partie de jonction comprenant un mélange de M1-M2-M3, où M1 est choisi dans le groupe constitué de BaO, SrO, CaO, MgO et de combinaisons de ceux-ci, et où M1 est présent en une quantité de 20 % molaire à 55 % molaire, M2 est le Al₂O₃ et où M2 est présent en une quantité de 2 à 15 % molaire, et où M3 est le SiO₂ avec au moins une certaine quantité de B₂O₃ et jusqu'à 50 % molaire de B₂O₃, et où M3 est présent en une quantité de 40 % molaire à 70 % molaire, ladite partie de jonction ayant un coefficient de dilatation thermique correspondant sensiblement à celui dudit composant céramique solide et dudit au moins un autre composant solide ;
(b) placer ledit mélange au niveau d'une interface dudit composant céramique solide et dudit au moins un autre composant solide, en tant qu'un pré-ensemble ;
(c) chauffer ledit pré-ensemble à une température suffisante pour pousser le mélange à s'écouler dans ladite interface en tant qu'ensemble ; et
(d) refroidir ledit ensemble et solidifier ledit mélange, en joignant ainsi ledit composant céramique solide et ledit au moins un autre composant solide.

13. Procédé selon la revendication 12, dans lequel la jonction se fait par scellement.

14. Procédé selon la revendication 12, dans lequel ledit coefficient de dilatation thermique est compris entre environ 7 x 10⁻⁶° C⁻¹ et environ 16 x 10⁻⁶° C⁻¹, comme mesuré entre 25° C et 1 000 C.

15. Procédé selon la revendication 12, comprenant en outre au moins un oxyde métallique supplémentaire.

16. Procédé selon la revendication 15, dans lequel au moins un oxyde métallique supplémentaire est choisi dans le groupe constitué de ZrO₂, TiO₂, Cr₂O₃, et de combinaisons de ceux-ci.

17. Procédé selon la revendication 12, dans lequel ledit composant céramique solide et ledit au moins un autre composant solide sont une pompe ionique d'oxygène et un matériau d'essai dans une cellule d'essai électrochimique.

18. Procédé selon la revendication 13, dans lequel ledit composant céramique solide et ledit au moins un autre composant solide sont un conducteur ionique d'oxygène et une interconnexion dans un réservoir à combustible.

19. Procédé selon la revendication 12, dans lequel ledit composant céramique solide et ledit au moins un autre composant solide sont un conducteur ionique d'oxygène et une interconnexion dans un générateur d'oxygène.
